# EUROPEAN PATENT SPECIFICATION

(11) **EP 1 746 514 B1**
(45) Date of publication and mention of the grant of the patent: **16.07.2008**
(21) Application number: 06252519.1
(22) Date of filing: 12.05.2006
(51) Int. Cl.: G06F 13/40

(54) **Data bus logical bypass mechanism**
Datenbus Umführungseinrichtung
Mécanisme de contournement dans un bus de données

(30) Priority: 19.07.2005 US 700694 P; 27.04.2006 US 380465
(43) Date of publication of application: 24.01.2007
(73) Proprietor: VIA Technologies, Inc., Hsin-Tien City Taipei Hsien 231 (TW)
(72) Inventor: Gaskins, Darius D., Austin, Texas 78750 (US)
(74) Representative: O'Connell, David Christopher

(56) References cited:
- WO-A-93/19422
- US-A- 5 339 399
- US-A- 5 461 330
- US-A- 5 797 026
- US-B1- 6 636 939

## Description

### BACKGROUND OF THE INVENTION

### FIELD OF THE INVENTION

This invention relates in general to the field of microelectronics, and more particularly to an apparatus and method digital device that enables sampling of bussed signals which are sourced out over a medium that is susceptible noise and transmission line effects.

### DESCRIPTION OF THE RELATED ART

In a present day microprocessor, such as an x86-compatible microprocessor, transactions (i.e., read and write transactions) to/from memory are accomplished over a system bus. The system bus typically includes address signals, data signals, and control signals. These signals, with minor variation from system to system, provide for communication with bus agents or like devices to indicate what type of transaction is requested, the parameters of that transaction, and to transmit/receive data. Also, in order to transfer data very rapidly over the bus, the preferred mode of a transaction is to transfer an entire cache line.

However, as one skilled in the art will appreciate, the caching of data in local memory (i.e., a "cache") presents significant coherency problems to a system designer. This is why virtually all present day bus specifications, or protocols, require devices on the system bus to "snoop" the transactions that occur over the bus. And if a snooped transaction "hits" (i.e., the snooping agent determines that it has a local copy of the transaction data), then the bus protocols provide procedures whereby all memories are updated with the correct data.

Not only is a given device required to snoop other devices transactions over the bus, but it is also required to snoop its own transactions that it issues to the bus. Accordingly, when the given device outputs data (or an address, or a control signal), the device is required by protocol to monitor (i.e., "self-snoop") the states of data on the bus and to perform certain actions as a function of the snooped states. But as one skilled in the art will appreciate, when data is transferred to a bus, be it point-to-point or multi-point, transmission line effects, propagation effects, and other sources of noise can perturb and degrade the transmitted data states such that errors are present when the data is snooped. And even though the given device may incorporate any of a number of well known error detection and correction mechanisms, the employment of these mechanisms is still "after the fact" and detrimental to overall bus throughput.

Consequently, the present inventor has observed that it is desirable to eliminate the sources of error altogether, as opposed to detecting and correcting bus errors during a self-snoop operation.

[0005b] US 6636939 discloses apparatus and method for forwarding a processor request to a memory interface unit via one of two paths, depending on the attributes of the request.

### SUMMARY OF THE INVENTION

The present invention, among other applications, is directed to solving the above-noted problems and addresses other problems, disadvantages, and limitations of the prior art. In one embodiment, a microprocessor apparatus is provided, for performing a self-snoop operation. The microprocessor apparatus includes output driver logic and bypass logic. The output driver logic is configured to drive a latched signal out to a bus. The bypass logic is coupled to the latched signal. The bypass logic is configured to provide the latched signal as a snoop result during the self-snoop operation.

Another embodiment contemplates a bus interface. The bus interface has output driver logic, input receiver logic, and bypass logic. The output driver logic drives a latched signal out to a bus. The input receiver logic is coupled to the bus, and senses a value of the bus. The bypass logic is coupled to the latched signal. The bypass logic provides the latched signal as a snoop result during a self-snoop operation, the latched signal being provided rather that the value.

A further embodiment comprehends a method for performing a self-snoop operation. The method includes latching a value to be driven out to a bus; driving the latched value out to the bus; and rather than snooping the state of the bus to determine a snoop result, providing the latched value as the snoop result.

### BRIEF DESCRIPTION OF THE DRAWINGS

These and other objects, features, and advantages of the present invention will become better understood with regard to the following description, and accompanying drawings where:

FIGURE 1 is a block diagram illustrating a conventional microprocessor interface system;

FIGURE 2 is a block diagram depicting sampled data bus logic disposed within a conventional microprocessor, such as the microprocessor of FIGURE 1, to support a bus protocol that requires self-snooping;

FIGURE 3 is a timing diagram featuring signal states of the sampled data bus logic of FIGURE 2 when performing a self-snoop operation;

FIGURE 4 is a block diagram showing an interface system featuring a microprocessor according to the present invention that supports logical bypass of bussed signals;

FIGURE 5 is a block diagram illustrating bus interface logic according to the present invention for performing logical bypass of bussed signals; and

FIGURE 6 is a timing diagram detailing signal states of the bus interface logic of FIGURE 5 when performing a self-snoop operation.

### DETAILED DESCRIPTION

The following description is presented to enable one of ordinary skill in the art to make and use the present invention as provided within the context of a particular application and its requirements. Various modifications to the preferred embodiment will, however, be apparent to one skilled in the art, and the general principles defined herein may be applied to other embodiments. Therefore, the present invention is not intended to be limited to the particular embodiments shown and described herein, but is to be accorded the widest scope consistent with the principles and novel features herein disclosed.

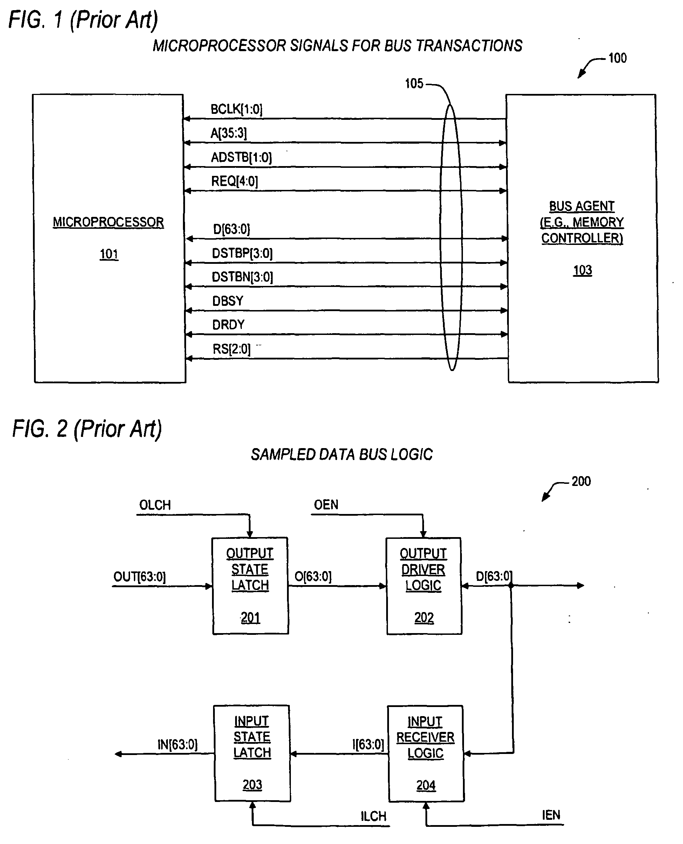

Referring to FIGURE 1, a simplified block diagram is presented of a conventional microprocessor interface system 100. The microprocessor interface system 100 includes a microprocessor 101 and a bus agent 103 interfaced with a system bus 105. The bus agent 103 represents any number of different types of devices known to those skilled in the art, such as a memory controller, a host/PCI (Peripheral Component Interconnect) bridge, a chipset, etc. The system bus 105 includes signals for performing data transactions, including a bidirectional address bus A[35:3], a bidirectional data bus DATA[63:0], and multiple control signals. In the block diagram, the address bus has 33 signals shown as A[35:3] and the data bus has 64 signals shown as DATA[63:0], although it is understood that the address and data buses may be stand-alone or multiplexed, and may have any suitable number of signals depending upon the particular configuration and architecture. One skilled will appreciate from the block diagram that least significant address signals (A[2:0]) are not shown because they are not required under a configuration that allows for transfer of data with quadword granularity, such a configuration being the present state of the art.

The control signals include a differential clock bus BCLK[1:0], a bidirectional address strobe bus ADSTB[1:0] (indicating validity of addresses on the address bus A[35:3]), a bidirectional request bus with signals REQ[4:0] specifying the type of transaction requested (e.g., memory code read, memory data read, memory line write, memory quadword write with byte enables), a pair of data strobe buses DSTBP[3:0] and DSTBN[3:0], a bidirectional data bus busy signal DBSY (asserted by the entity that is providing data on the DATA bus), a data ready signal DRDY (asserted by either the device providing data during all clock cycles that data is transferred over the DATA bus), and a response bus RS[2:0] which provides the type of transaction response (e.g., no data, normal data, implicit writeback) that is being completed over the DATA bus. In the illustrated embodiment, the RS bus has 3 signals shown as RS[2:0] and is asserted by the bus agent 103.

The signals shown for the conventional microprocessor interface system 100 are provided in virtually all present day microprocessors with minor variation. As alluded to above, some processors multiplex addresses and data over the same signal group and thus provide control signals to indicate whether data or addresses are present. Other microprocessors utilize different address or data bus widths or control signals alternatively named. Still further, addresses and/or data may be multiplexed over a smaller bus size than those illustrated by the conventional microprocessor interface system 100. Yet other configurations provide for more than two devices to be interconnected over the interface system 100, such as is shown in the block diagram. What is important to note is that substantially all processors provide signals for communication with bus agents or like devices to indicate what type of transaction is requested, the parameters of that transaction, and to transmit/receive the data. For example, the bus 105 shown in FIGURE 1 and the operation of transactions and corresponding signals as named alluded to above in an x86-compatible microprocessor are described in numerous references, one of which is "The Unabridged Pentium® 4 IA32 Processor Genealogy, 1st Edition," by Tom Shanley.

In a present day microprocessor, including the microprocessor 101, data can be transferred very rapidly and on a cache line basis (e.g., eight quadwords for a 64-byte cache line) according to a "quad-pumped" configuration. When transferring an entire cache line, only two cycles of the bus clock signals BCLK[1:0] are required to transfer the eight associated quadwords in a cache line. Accordingly, four quadwords are transferred during each cycle of the bus clock BCLK[1:0], thus accounting for the descriptor "quad-pumped." During this type of data transfer, the signals of the data strobe buses DSTBP[3:0], DSTBN[3:0] are provided to indicate the validity of various quadword beats on the data bus so that four beats are transferred during a single bus clock (each "beat" including the 64 bits of the data bus DATA[63:0]).

Presently, bus clock frequencies are in the range of hundreds of Megahertz, thus exhibiting a challenging transmission line environment under which data must be reliably transferred between the microprocessor 101 and the bus agent 103. Techniques employed to preclude noise and other transmission line effects which could degrade the transmission of data over the system bus 105 include active bus termination and dynamic termination impedance control, and others well known in the art. Yet in spite of these measures, it is still possible - and quite probable - that erroneous data will be received. And this is why virtually all present day interfaces 100 include mechanisms for detecting and correcting erroneous data. Such mechanisms parity, error correction codes, and other error detection/correction techniques.

While error detection/correction techniques have proved to be reliable for transmitting data, it is noted that detection and correction of bus errors significantly affects performance of the bus 100. And the present inventor has observed that rather than detecting and correcting bus errors, it is desirable to eliminate the sources of error altogether.

One prominent category of bus errors results from a self-snooping requirement that is called for by many present day bus protocols. More specifically, when transmitting address, data, or other signals over the bus 105, the processor 101 is required to monitor (i.e., "self-snoop") the states of specified signal groups and to perform certain actions as a function of the snooped states. That is, a device 101 that is driving data D[63:0] (or an address A[35:3], or a control signal (e.g., REQ[4:0]) out to the bus 105 is required to read that "data" as an input to the device 101 in order to satisfy the self-snooping requirement of the bus protocol. For instance, many bus protocols require self-snooping of address signals A[35:3] and data signals D[63:0] in particular to enable a microprocessor 101 to modify its own instruction flow (i.e., "self-modifying code") while ensuring the integrity of data stored within internal and external memory caches. It is beyond the scope of this application to provide an in-depth discussion of self-snooping bus protocols, for such a discussion would tend to obscure relevant aspects of the present invention. For clarity purposes, however, it is sufficient to note that a self-snooping requirement, as will be described in further detail below, presents a significant challenge to a designer, particularly with regard to errors that might occur on the bus due to noise. As the device 101 transfers data (or an address, or a control signal) out to the bus 105, transmission line effects and other sources of noise can perturb and degrade the transmitted data state such that errors are present when the data is snooped by the transmitting device 101, thus causing the self-snooped state to be different than the state which was originally driven out to the bus 105. And even though the device 101 may incorporate error detection and correction mechanisms as mentioned above, the employment of these mechanisms is detrimental to overall bus throughput.

Turning now to FIGURE 2, a block diagram is presented featuring sampled data bus logic 200 such as might be included in a present day processor, like the processor 101 of FIGURE 1. The bus logic 200 includes an output state latch 201 that receives an output latch input bus OUT[63:0] from core logic (not shown) within the processor. The output state latch 201 is enabled by an output latch signal OLCH and provides a latched output bus O[63:0] to output driver logic 202. The output driver logic 202 is enabled by an output enable signal OEN and drives a data bus D[63:0], substantially similar to the like named data bus D[63:0] of FIGURE 1.

The data bus D[63:0] is also coupled to input receiver logic 204. The receiver logic 204 is enabled by an input enable signal IEN and outputs a received input bus I[63:0], which is coupled to an input state latch 203. The input state latch 203 is enabled by an input latch signal ILCH and produces a latched input bus IN[63:0].

One skilled in the art will appreciate that the enable signals OLCH, OEN, ILCH, IEN are generated by the core logic as well, typically in synchronization with a core clock signal (not shown). In addition, it is noted that although a data bus D[63:0] is depicted in the block diagram, for purposes of this disclosure, any type of bussed signal which is required to be self-snooped by protocol specifications is comprehended by the teachings herein.

In operation, when data is to be driven out of the processor to the data bus D[63:0], the core logic initializes the values of the output latch input bus OUT[63:0] and causes these values to be latched on the latched output bus O[63:0] by signaling the output state latch 201 via signal OLCH. Subsequently, the values on the latched output bus O[63:0] are driven out to the data bus D[63:0] by enabling the output driver logic 202 via signal OEN.

After driving the data bus D[63:0], a self-snooping requirement mandates that the values of D[63:0] be sampled for purposes beyond the scope of this application. Accordingly, the core logic asserts signal IEN to cause the input receiver logic 204 to sample the driven values of D[63:0], which are provided to bus I[63:0]. And then the core logic asserts signal ILCH to cause the input state latch 203 to latch the values on bus I[63:0]. The latched values are output to the latched input bus IN[63:0]. Thus, the processor has performed a self-snoop operation, by sampling and latching the values of the driven data bus D[63:0] back through to the latched input bus IN[63:0].

One skilled in the art will appreciate that in a conventional bussed device configuration, such as the configuration 100 of FIGURE 1, the data bus D[63:0] may be coupled to a single device, or to multiple devices. In addition, the mechanism for coupling the data bus D[63:0] to the various devices, including the processor, will be susceptible to transmission line effects, propagation effects, radiated emissions, cross-coupling effects (conducted emissions), and other well known sources of noise and interference which will result in values of D[63:0] that may not be equal to the values of the latched output bus O[63:0]. And consequently, when the values of D[63:0] are self-snooped, it is possible that the values on the latched input bus IN[63:0] will not be the same as what the processor latched for output on bus O[63:0].

Typically, if the source of interference is propagation or transmission line effects, the resulting bus errors can be modeled and compensated for based upon the specific transmission line environment. However, the parameters of such an environment may not be known to a designer prior to fixing a specific configuration. In addition, other noise effects, some of which are noted above, are random. This is why most present day buses incorporate some form of error detection and correction. But, as is noted above, the present inventor has observed that it is more desirable under conditions that require self-snooping, or self-sampling of data, to provide a technique whereby self-snooping errors are eliminated altogether.

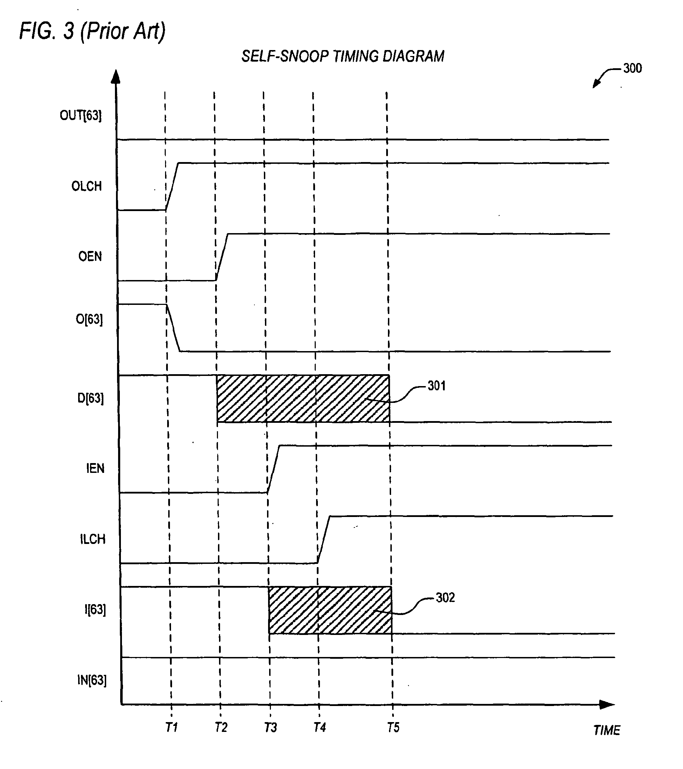

Turning now to FIGURE 3, a timing diagram 300 is presented featuring signal states of the sampled data bus logic 200 of FIGURE 2 when performing a self-snoop operation. The timing diagram 300 shows one of the data bus signals OUT[63], along with its corresponding core signals O[63], D[63], I[63], IN[63] as are generated as a result of the various states of core control signals OLCH, OEN, IEN, ILCH during the self-snoop operation alluded to above. The signal states, or signal values, are shown in the timing diagram 300 to be a high logic level or low logic level as a function of time. For purposes of this application, the particular values of a high or low logic level are not relevant and these levels may be modified to suit individual configurations. In addition, one skilled in the art will appreciate that signal skew rates and other physical phenomena such as gate delay in digital logic devices may affect the relative times of state changes for the signals, however, for clarity purposes, these affects are not depicted.

At time T1, core logic within the processor has set OUT[63] to a logic low level (e.g., "logical 0") thus indicating that the logic low level is to be driven out to the bus on D[63]. For purposes of teaching the state of the art, it is assumed that the processor is coupled to a data bus D[63:0] that employs active pull-up terminations, and thus, D[63] is shown to be pulled up on the bus to a logical high level at time T1. Signals OLCH and OEN are shown unasserted prior to time T1, but at T1, signal OLCH is asserted, thus directing the output state latch 201 to latch O[63]. Responsive to the transition of OLCH, the output state latch 201 drives and latches O[63] to a corresponding logic low level.

At time T2, the core logic drives signal OEN high, thus directing the output driver logic 202 to drive D[63] to the same state as O[63], which has been latched to a low level. But because of the sources of noise, interference, and error described previously, the state, or value, of D[63] remains uncertain. For purposes of teaching deficiencies in the art, the timing diagram 300 shows a data bus uncertainty region 301 between times T2 and T5. Accordingly, although D[63] should be driven low on the bus immediately subsequent to the assertion of OEN at time T2, its actual state is uncertain during the period between T2 and T5, and may be anywhere between the low and high levels , or completely outside of the range bounded by the logic low and high levels due to ringing.

At time T3, the self-snooping operation begins when the core logic asserts IEN, thus sampling the value of D[63]. At IEN causes the input receiver logic 204 to sense the state of D[63], the sensed, or sampled, state is provided on I[63]. Accordingly, the value of I[63] is also shown to be uncertain by input uncertainty region 302 between times T3 and T5. Depending upon the specific configuration of input receiver logic 204, I[63] may or may not follow the value ofD[63], albeit scaled for presentation to the input state latch 203.

At time T4, signal ILCH directs the input state latch 203 to latch the value of I[63] and to provide the self-snooped state of D[63] to the core logic on signal IN[63]. As shown in the timing diagram, IN[63] at time T4 does not change from a logic high level because it is presumed for disclosure purposes that the state of I[63] is high when ILCH is asserted. Consequently, a self-snoop error has occurred. More specifically, the core logic has provided a low level on OUT[63] to be driven to the bus on D[63], but when the self-snoop operation is performed, the state of the bus D[63] is such that a erroneous, low level is sampled and latched on IN[63].

The timing diagram 300 illustrates in simple terms the problems that are evident in the current state of the art when self-snooping is performed on bussed signals. And although only one bussed signal D[63] is featured, one skilled will appreciate that the same noted error can occur on any bussed signal (data, address, control, etc.) that must be sampled by the driving device. And as has been previously noted, although there are known mechanisms for detecting and correcting erroneous sampled signal states, it is more desirable to eliminate the errors altogether. Furthermore, as bus speeds are increasing along with commensurate decreases in bus voltages, the present inventor has noted that it is increasingly problematic to self-snoop bussed signals. The problems of self-snooping become more and more prevalent as transmission line effects increase. Certainly, mismatched source and termination impedances on a bussed signal can cause false states to be sampled, but even when these impedances are matched, a source driver 202 may exhibit degradation to the extent that false states are sampled by the input receiver logic 204 and are latched by the input state latch 203.

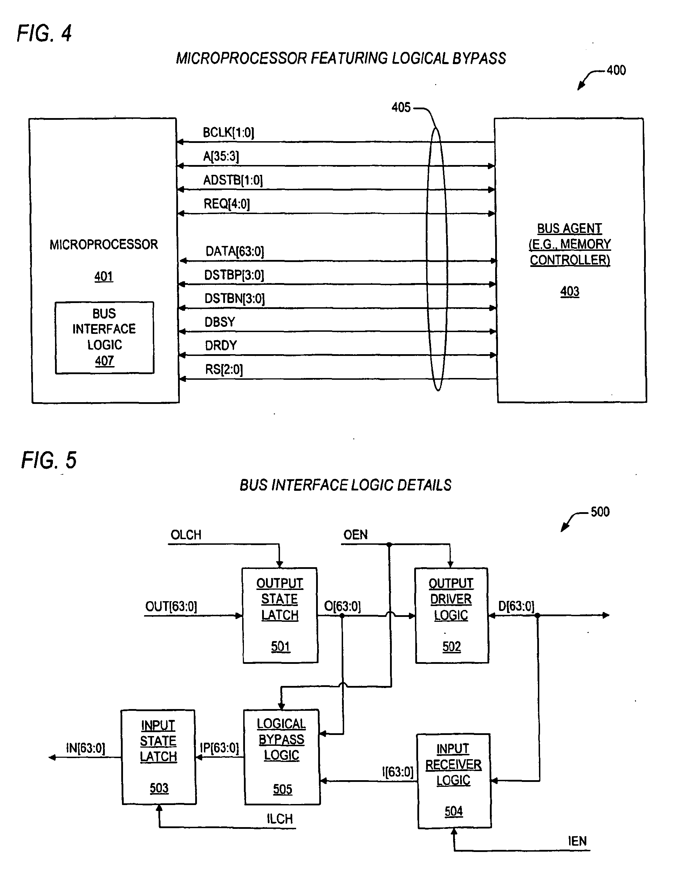

The present invention overcomes these noted limitations by providing apparatus and methods for performing a logical bus bypass operation that enables the true state of a bussed signal to be sampled, or self-snooped, by the driving device, with certainty. Accordingly, the present invention will now be discussed with reference to FIGURES 4-6.

Turning to FIGURE 4, a block diagram is presented showing a interface system 400 featuring a microprocessor 401 according to the present invention that supports logical bypass of bussed signals. The interface system 400 includes a microprocessor 401 and a bus agent 403 interfaced with a system bus 405. The bus agent 403 represents any number of different types of devices known to those skilled in the art, such as a memory controller, a host/PCI (Peripheral Component Interconnect) bridge, a chipset, etc. The system bus 405 includes signals for performing data transactions, including a bidirectional address bus A[35:3], a bidirectional data bus DATA[63:0], and multiple control signals. In the block diagram, the address bus has 33 signals shown as A[35:3] and the data bus has 64 signals shown as DATA[63:0], although it is understood that the address and data buses may be stand-alone or multiplexed, and may have any suitable number of signals depending upon the particular configuration and architecture. One skilled will appreciate from the block diagram that least significant address signals (A[2:0]) are not shown because they are not required under a configuration that allows for transfer of data with quadword granularity, such a configuration being the present state of the art.

The control signals include a differential clock bus BCLK[1:0], a bidirectional address strobe bus ADSTB[1:0] (indicating validity of addresses on the address bus A[35:3]), a bidirectional request bus with signals REQ[4:0] specifying the type of transaction requested (e.g., memory code read, memory data read, memory line write, memory quadword write with byte enables), a pair of data strobe buses DSTBP[3:0] and DSTBN[3:0], a bidirectional data bus busy signal DBSY (asserted by the entity that is providing data on the DATA bus), a data ready signal DRDY (asserted by either the device providing data during all clock cycles that data is transferred over the DATA bus), and a response bus RS[2:0] which provides the type of transaction response (e.g., no data, normal data, implicit writeback) that is being completed over the DATA bus. In the illustrated embodiment, the RS bus has 3 signals shown as RS[2:0] and is asserted by the bus agent 403.

Although the signals shown for the interface system 400 are provided in virtually all present day microprocessors with minor variation, the present invention also contemplates a microprocessor that multiplexes addresses and data over the same signal group and thus provides control signals to indicate whether data or addresses are present. The present invention also comprehend a microprocessor that utilizes different address or data bus widths or control signals alternatively named. Still further, embodiments of the present invention includes a processor that multiplexes addresses and/or data over a smaller bus size than those illustrated in FIGURE 4. Yet other embodiments of the present invention provide for more than two devices to be interconnected over the interface system 400, as opposed to the two devices 401, 403 shown in the block diagram.

Like the present day microprocessor 101 of FIGURE 1, the microprocessor 401 according to the present invention transfers data very rapidly on a cache line basis according to a "quad-pumped" configuration. When transferring an entire cache line, two cycles of the bus clock signals BCLK[1:0] are required to transfer eight associated quadwords in a cache line. Accordingly, four quadwords are transferred during each cycle of the bus clock BCLK[1:0], and during this type of data transfer, the signals of the data strobe buses DSTBP[3:0], DSTBN[3:0] are provided to indicate the validity of various quadword beats on the data bus so that four beats are transferred during a single bus clock.

In contrast to a conventional microprocessor, the microprocessor 401 according to the present invention includes bus interface logic 407 that enables the processor 401 to self-snoop (e.g., "sample") data, addresses, or other bussed signals, as directed by protocol specifications, with certainty that transmission line effects, propagation effects, and other sources of noise and/or interference will not result in snoop errors. When output data is to be driven to the bus 405, the bus interface logic 407 enables the output data to logically bypass input receiver logic during a self-snoop operation, as will be described in further detail below. A logical bypass is accomplished by routing latched output data, which is driven to the bus 405 through driver logic, back as an input to input state logic, whereby the latched output data is provided to core logic as sampled bus data during a self-snoop operation rather than a true sample of what is currently on the bus 405. Consequently, the self-snoop data which is provided to the core of the processor 401 by the bus interface logic 407 is identical to that which is routed to the bus 405, and is furthermore not subject to any of the noise or interference sources noted above. The bus interface logic 407 comprises logic, circuits, devices, or microcode (i.e., micro instructions or native instructions), or a combination of logic, circuits, devices, or microcode, or equivalent elements that are employed to perform a logical bypass of output data during a self-snoop operation. The elements employed to perform this operation may be shared with other circuits, microcode, etc., that are employed to perform other functions within the microprocessor 401. According to the scope of the present application, microcode is a term employed to refer to a plurality of micro instructions. A micro instruction (also referred to as a native instruction) is an instruction at the level that a unit executes. For example, micro instructions are directly executed by a reduced instruction set computer (RISC) microprocessor. For a complex instruction set computer (CISC) microprocessor such as an x86-compatible microprocessor, x86 instructions are translated into associated micro instructions, and the associated micro instructions are directly executed by a unit or units within the CISC microprocessor.

Now referring to FIGURE 5, a block diagram is presented featuring bus interface logic 500 according to the present invention for performing logical bypass of bussed signals. Like the conventional bus logic 200 of FIGURE 2, the bus logic 200 according to the present invention includes an output state latch 501 that receives an output latch input bus OUT[63:0] from core logic (not shown) within the processor. The output state latch 501 is enabled by an output latch signal OLCH and provides a latched output bus O[63:0] to output driver logic 502. The output driver logic 502 is enabled by an output enable signal OEN and drives a data bus D[63:0], substantially similar to the like named data bus D[63:0] of FIGURE 4.

The data bus D[63:0] is also coupled to input receiver logic 504. The receiver logic 504 is enabled by an input enable signal IEN and outputs a received input bus I[63:0]. However, in contrast to conventional bus logic 200, the bus interface logic 400 according to the present invention includes logical bypass logic 505, to which is coupled the received input bus I[63:0] and the latched output bus O[63:0]. The logical bypass logic 505 is enabled for performing a logical bypass operation by assertion of the output enable signal OEN. In one embodiment, the logical bypass logic 505 comprises a 2-to-1 mux.

The logical bypass logic 505 outputs a bypass bus IP[63:0], which is coupled to an input state latch 503. The input state latch 503 is enabled by an input latch signal ILCH and produces a latched input bus IN[63:0].

The enable signals OLCH, OEN, ILCH, IEN are generated by the core logic, typically in synchronization with a core clock signal (not shown). In addition, although a data bus D[63:0] is depicted in the block diagram, for purposes of this disclosure, any type of bussed signal which is required to be self-snooped by protocol specifications is comprehended by the present invention.

In operation, when data is to be driven out of the processor to the data bus D[63:0], the core logic initializes the values of the output latch input bus OUT[63:0] and causes these values to be latched on the latched output bus O[63:0] by signaling the output state latch 201 via signal OLCH. Subsequently, the values on the latched output bus O[63:0] are driven out to the data bus D[63:0] by enabling the output driver logic 402 via signal OEN.

In addition, when signal OEN is asserted, the values of the latched output bus O[63:0] (i.e., the data values that are driven to the bus D[63:0]) are routed through the logical bypass logic 505 to bus IP[63:0] and the values on bus I[63:0] are blocked. Thus, during the subsequent self-snoop operation when the core logic asserts signal IEN to cause the input receiver logic 404 to sample the driven values of D[63:0], which are provided to bus I[63:0], rather than providing the driven values of D[63:0] to the input state latch 503 for sampling, the values of the latched output bus O[63:0] are provided in their place. So, when the core logic asserts signal ILCH to cause the input state latch 503 to latch the values on bus IP[63:0], it is the values of the latched output bus O[63:0] which are sampled and provided to the latched input bus IN[63:0]. Thus, the processor has performed a self-snoop operation without being subject to errors caused by transmission line effects, propagation effects, noise, or other sources..

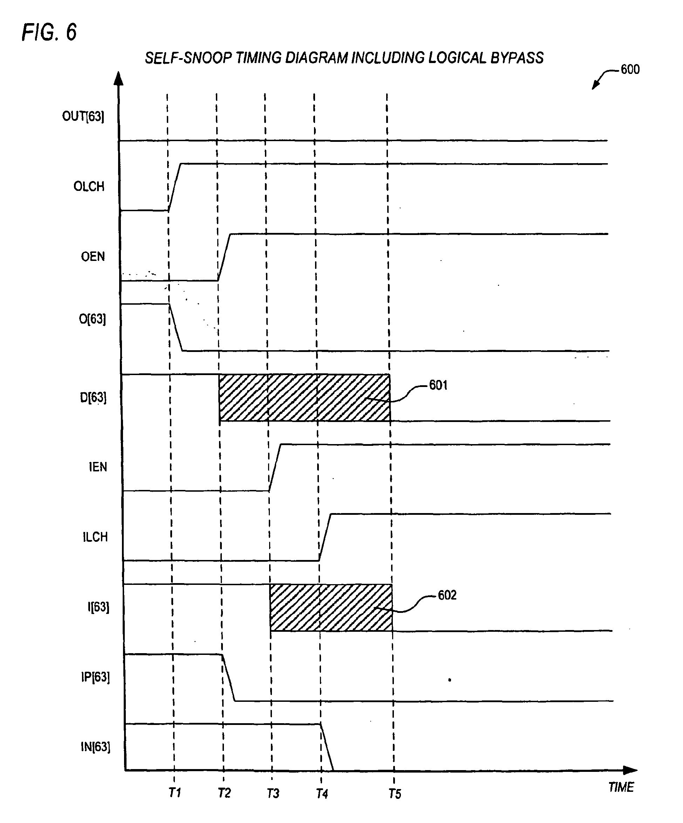

Turning to FIGURE 6, a timing diagram 600 is presented detailing signal states of the bus interface logic of FIGURE 5 when performing a self-snoop operation. The timing diagram 600 shows one of the data bus signals OUT[63], along with its corresponding core signals O[63], D[63], I[63], IP[63], IN[63] as are generated as a result of the various states of core control signals OLCH, OEN, IEN, ILCH during the self-snoop operation described above. The signal states, or signal values, are shown in the timing diagram 600 to be a high logic level or low logic level as a function of time. For purposes of this disclosure, embodiments of the present invention comprehend any variation of logic levels according to the requirements of individual system configurations. In addition, one skilled in the art will appreciate that signal skew rates and other physical phenomena such as gate delay in digital logic devices may affect the relative times of state changes for the signals, however, for clarity purposes, these affects are not depicted in the timing diagram 600.

At time T1, core logic within the processor has set OUT[63] to a logic low level (e.g., "logical 0") thus indicating that the logic low level is to be driven out to the bus on D[63]. For purposes of teaching the state of the art, it is assumed that the processor is coupled to a data bus D[63:0] that employs active pull-up terminations, and thus, D[63] is shown to be pulled up on the bus to a logical high level at time T1, however, the present invention comprehends other types of bus configurations as well. Signals OLCH and OEN are shown unasserted prior to time T1, but at T1, signal OLCH is asserted, thus directing the output state latch 501 to latch O[63]. Responsive to the transition of OLCH, the output state latch 501 drives and latches O[63] to a corresponding logic low level. O[63] is also routed to the logical bypass logic 505.

At time T2, the core logic drives signal OEN high, thus directing the output driver logic 202 to drive D[63] to the same state as O[63], which has been latched to a low level. But because of the sources of noise, interference, and error described previously, the state, or value, of D[63] remains uncertain. For purposes of teaching deficiencies in the art, the timing diagram 300 shows a data bus uncertainty region 301 between times T2 and T5. Accordingly, although D[63] should be driven low on the bus immediately subsequent to the assertion of OEN at time T2, its actual state is uncertain during the period between T2 and T5, and may be anywhere between the low and high levels , or completely outside of the range bounded by the logic low and high levels due to ringing. But since O[63] is also routed to the logical bypass logic 505, when OEN goes high, O[63] is routed through the logical bypass logic 505 to IP[63]. So, while the value of D[63] remains uncertain, the desired output value O[63] is certain, and is provided as an input to the input state latch 503 for sampling during a self-snoop.

At time T3, the self-snooping operation begins when the core logic asserts IEN, thus sampling the value of D[63]. At IEN causes the input receiver logic 204 to sense the state of D[63], the sensed, or sampled, state is provided on I[63]. Accordingly, the value of I[63] is also shown to be uncertain by input uncertainty region 302 between times T3 and T5. Depending upon the specific configuration of input receiver logic 204, I[63] may or may not follow the value of D[63], albeit scaled for presentation to the input state latch 203. But the logical bypass logic 505 according to the present invention blocks I[63] from being provided as an input to the input state latch 503, thus eliminating the source of errors for the self-snoop operation.

At time T4, signal ILCH directs the input state latch 203 to latch the value of IP[63] and to provide the self-snoop result to the core logic on signal IN[63]. As shown in the timing diagram, IN[63] at time T4 correctly changes from a logic high level to a logic low level because although the state of I[63] may be subject to bus related errors, the value of IP[63] is not. Consequently, a self-snoop operation is accomplished without error. More specifically, the core logic has provided a low level on OUT[63] to be driven to the bus on D[63], and when the self-snoop operation is performed, the latched state O[63] is sampled and latched on IN[63] via the logical bypass logic 505.

The timing diagram 600 illustrates in simple terms how the present invention overcomes the limitations and disadvantages of the current art when self-snooping is performed on bussed signals. And although only one bussed signal D[63] is featured, one skilled will appreciate that the concepts taught herein apply to any type of bussed signal (data, address, control, etc.) that is sampled by the driving device. In addition, the present invention does not preclude incorporation of known mechanisms for detecting and correcting erroneous sampled signal states, for such mechanisms are required when receiving data from the bus that is driven by another source. But when data is self-sourced, the present invention allows for elimination of bus the errors during an associated self-snoop.

Although the present invention and its objects, features, and advantages have been described in detail, other embodiments are encompassed by the invention as well. For example, the present invention has been discussed at length according to embodiments that are compatible with the well known x86 architecture, in particular, the associated quad-pumped bus protocol. However, the discussions have been provided in such a manner because the x86 architecture is widely comprehended and thus provides a useful vehicle to teach the present invention. The present invention nevertheless comprehends embodiments that comport with other bus configurations as well such as PowerPC®, MIPS®, and the like, in addition to entirely new configurations.

The present invention in addition comprehends execution of logical bypass during self-snoop operations within devices other than a processor. For example, the logical bypass operations according to the present invention could easily be applied within an embodiment of an intelligent bus master or other direct memory access device. In fact, it is contemplated that the present invention applies to any devices that sources, or drives, one or more signals to a bus where it is required that the device perform a self-snoop of that (those) signals.

Those skilled in the art should appreciate that they can readily use the disclosed conception and specific embodiments as a basis for designing or modifying other structures for carrying out the same purposes of the present invention, and that various changes, substitutions and alterations can be made herein without departing from the scope of the invention as defined by the appended claims.

## Claims

1. A microprocessor (401) apparatus for performing a self-snoop operation, **characterized by**:
output driver logic (502), configured to drive a latched signal out to a bus (405); and by pass and logic (505), configured to receive said latched signal, and configured to provide said latched signal as a snoop result during the self-snoop operation.

2. The microprocessor (401) apparatus as recited in claim 1, wherein said bus (405) comprises an x86-compatible point-to-point bus.

3. The microprocessor (401) apparatus as recited in claim 1, wherein said bus (405) comprises a data bus.

4. The microprocessor (401) apparatus as recited in claim 1, wherein said bus (405) comprises an address bus.

5. The microprocessor (401) apparatus as recited in claim 1, wherein said bus (405) comprises a control bus.

6. The microprocessor (401) apparatus as recited in claim 1, wherein said bus (405) couples the microprocessor (401) to a bus agent (403).

7. The microprocessor (401) apparatus as recited in claim 1, wherein said bypass logic (505) comprises a 2-to-1 mux.

8. The microprocessor (401) apparatus as recited in claim 1, wherein said bypass logic (505) and said output driver logic (502) are enabled by an output enable signal.

9. The apparatus as recited in claim 1, wherein said bypass logic (505) otherwise routes a received input bus to an input state latch (503), and wherein said received input bus is coupled to said bus (405) through input receiver logic (504).

10. A method for performing a self-snoop operation, comprising:
latching a value to be driven out to a bus (405);
driving the latched value out to the bus (405); and
rather than snooping the state of the bus (405) to determine a snoop result, providing the latched value as the snoop result.

11. The method as recited in claim 10, wherein the bus (405) comprises an x86-compatible point-to-point bus.

12. The method as recited in claim 10, wherein the bus (405) comprises a data bus.

13. The method as recited in claim 10, wherein the bus (405) comprises an address bus.

14. The method as recited in claim 10, wherein the bus (405) comprises a control bus.

15. The method as recited in claim 10, wherein the bus (405) couples a microprocessor to a bus agent.

16. The method as recited in claim 10, wherein said providing is performed by a 2-to-1 mux.

17. The method as recited in claim 10, wherein said providing is responsive to assertion of an output enable signal that also initiates said driving.

## Patentansprüche

1. Apparat für einen Mikroprozessor (401) für die Durchführung eines Selbstüberprüfungsvorgangs, **gekennzeichnet durch**:
ein Ausgangstreiberschaltnetz (502), das konfiguriert ist für das Schalten eines gelatchten Signals zu einem Bus (405); und
eine Bypass-Logik (505), die konfiguriert ist für den Empfang des gelatchten Signals und für die Bereitstellung des gelatchten Signals als ein Überprüfungsergebnis während der Selbstüberprüfung.

2. Apparat für einen Mikroprozessor (401) nach Anspruch 1, wobei der Bus (405) einen x86-kompatiblen Punkt-zu-Punkt-Bus umfasst.

3. Apparat für einen Mikroprozessor (401) nach Anspruch 1, wobei der Bus (405) einen Datenbus umfasst.

4. Apparat für einen Mikroprozessor (401) nach Anspruch 1, wobei der Bus (405) einen Adressbus umfasst.

5. Apparat für einen Mikroprozessor (401) nach Anspruch 1, wobei der Bus (405) einen Steuerbus umfasst.

6. Apparat für einen Mikroprozessor (401) nach Anspruch 1, wobei der Bus (405) den Mikroprozessor (401) verbindet mit einem Bus-Agent (403).

7. Apparat für einen Mikroprozessor (401) nach Anspruch 1, wobei die Bypass-Logik (505) einen 2-zu-1-Multiptexer umfasst.

8. Apparat für einen Mikroprozessor (401) nach Anspruch 1, wobei die Bypass-Logik (505) und das Ausgangstreiberschaltnetz (502) aktiviert werden durch ein Outputfreigabesignal.

9. Apparat nach Anspruch 1, wobei die Bypass-Logik (505) andernfalls einen empfangenen Inputbus weiterleitet an einen Inputstatus-Latch (503), und wobei der empfangene Inputbus verbunden ist mit dem Bus (405) durch eine Inputempfangslogik (504).

10. Verfahren für die Durchführung eines Selbstüberprüfungsvorgangs, umfassend:
Latchen eines Werts, der zum Bus (405) zu schalten ist;
Schalten des gelatchten Werts zum Bus (405); und
statt des Überprüfens des Status des Busses (405) für die Bestimmung des Überprüfungsergebnisses, Bereitstellen des gelatchten Werts als Überprüfungsergebnis.

11. Verfahren nach Anspruch 10, wobei der Bus (405) einen x86-kompatiblen Punkt-zu-Punkt-Bus umfasst.

12. Verfahren nach Anspruch 10, wobei der Bus (405) einen Datenbus umfasst.

13. Verfahren nach Anspruch 10, wobei der Bus (405) einen Adressbus umfasst.

14. Verfahren nach Anspruch 10, wobei der Bus (405) einen Steuerbus umfasst.

15. Verfahren nach Anspruch 10, wobei der Bus (405) einen Mikroprozessor verbindet mit einem Bus-Agent.

16. Verfahren nach Anspruch 10, wobei das Bereitstellen von einem 2-zu-1-Multiplexer durchgeführt wird.

17. Verfahren nach Anspruch 10, wobei das Bereitstellen reagiert auf die Ausgabe eines Outputfreigabesignals, das auch das Schalten auslöst.

## Revendications

1. Appareil à microprocesseur (401) pour exécuter une opération d'auto-surveillance **caractérisé par** :
une logique de circuit de sortie (502) configurée pour délivrer un signal à verrouillage à un bus (405) ; et une logique de contournement (505) configurée pour recevoir ledit signal à verrouillage, et configurée pour délivrer ledit signal à verrouillage sous la forme d'un résultat de surveillance au cours de l'opération d'auto-surveillance.

2. Appareil à microprocesseur (401), tel que décrit dans la revendication 1, dans lequel ledit bus (405) comprend un bus point à point compatible x86.

3. Appareil à microprocesseur (401), tel que décrit dans la revendication 1, dans lequel ledit bus (405) comprend un bus de données.

4. Appareil à microprocesseur (401), tel que décrit dans la revendication 1, dans lequel ledit bus (405) comprend un bus d'adresses.

5. Appareil à microprocesseur (401), tel que décrit dans la revendication 1, dans lequel ledit bus (405) comprend un bus de commande.

6. Appareil à microprocesseur (401), tel que décrit dans la revendication 1, dans lequel ledit bus (405) couple le microprocesseur (401) à un agent de bus (403).

7. Appareil à microprocesseur (401), tel que décrit dans la revendication 1, dans lequel ladite logique de contournement (505) comprend un multiplexeur 2 vers 1.

8. Appareil à microprocesseur (401), tel que décrit dans la revendication 1, dans lequel ladite logique de contournement (505) et ladite logique de circuit de sortie (502) sont activées par un signal d'activation de sortie.

9. Appareil tel que décrit dans la revendication 1, dans lequel, à part cela, ladite logique de contournement (505) achemine un bus d'entrée reçue vers une bascule d'état d'entrée (503), et dans lequel ledit bus d'entrée reçue est couplé audit bus (405) par l'intermédiaire d'une logique de récepteur d'entrée (504).

10. Procédé pour exécuter une opération d'auto-surveillance comprenant les étapes consistant à :
verrouiller une valeur à délivrer vers un bus (405) ;
acheminer la valeur à verrouillage vers le bus (405) ; et
plutôt que de surveiller l'état du bus (405) pour déterminer un résultat de surveillance, délivrer la valeur à verrouillage comme résultat de surveillance.

11. Procédé, tel que décrit dans la revendication 10, dans lequel le bus (405) comprend un bus point à point compatible x86.

12. Procédé, tel que décrit dans la revendication 10, dans lequel le bus (405) comprend un bus de données.

13. Procédé, tel que décrit dans la revendication 10, dans lequel le bus (405) comprend un bus d'adresses.

14. Procédé, tel que décrit dans la revendication 10, dans lequel le bus (405) comprend un bus de commande.

15. Procédé, tel que décrit dans la revendication 10, dans lequel le bus (405) couple un microprocesseur à un agent de bus.

16. Procédé, tel que décrit dans la revendication 10, dans lequel ladite délivrance est effectuée par un multiplexeur 2 vers 1.

17. Procédé, tel que décrit dans la revendication 10, dans lequel ladite délivrance s'effectue en réaction à l'assertion d'un signal d'activation de sortie qui initie également ledit acheminement.
